# EUROPEAN PATENT APPLICATION

(11) **EP 3 043 131 A1**
(43) Date of publication of application: **13.07.2016**
(21) Application number: 15194148.1
(22) Date of filing: 11.11.2015
(51) Int. Cl.: F25D 23/02, F25D 27/00

(54) **APPLIANCE HAVING A HUMAN-MACHINE INTERFACE AND ILLUMINATED HANDLE RECESS**

(30) Priority: 29.12.2014 US 201414583871
(71) Applicant: Whirlpool Corporation, Benton Harbor, MI 49022 (US)
(72) Inventor: Cavalcanti, Daniel, 21025 Comerio (IT); Giacomini, Neomar, 21025 Comerio (IT)
(74) Representative: Guerci, Alessandro

(57) **Abstract**

An appliance (10) comprising an appliance housing (12) with an access opening (13), a closure element (18) that selectively covers the access opening, a handle recess (20, 120, 220) formed in the closure element, a human-machine interface (HMI) (14, 114, 214), an HMI housing (24, 124, 224), and at least one light source (22,122, 222). The light source is configured to provide light into the handle recess. The illumination from the light source may be used to light the handle recess.

## Description

### BACKGROUND

Household appliances, examples of which may include a clothes washer, clothes dryer, an oven, a cooktop, a refrigerator, or a dishwasher, etc., perform useful cycles of operation and often have electrical and mechanical components responsible for implementing the cycle of operation of the appliance, with one or more of the components controlling the operation of the other components. For example, a controller, such as a microprocessor-based controller, having a printed circuit board (PCB) with memory, may be used to control the operation of the various components to implement a cycle of operation. A human-machine interface (HMI) may be provided as part of or separate from the controller to provide input and output communication between a user of the appliance and the controller.

### SUMMARY

An appliance comprising an appliance housing having an access opening, a closure element that selectively covers the access opening, a handle recess formed in the closure element, an HMI having an HMI housing and a light source provided within the HMI housing. The HMI housing has an edge overlying the handle recess and forms at least a portion of a handle. The light source is configured to provide light into the handle recess.

### BRIEF DESCRIPTION OF THE FIGURES

In the drawings:
FIG. 1 is a view of an exemplary appliance that includes an HMI and illuminated handle recess according to an embodiment of the invention.
FIG. 2 is a view of a portion of the appliance of FIG. 1 showing the HMI and handle recess.
FIG. 3 is a top, cross-sectional view of the appliance of FIG. 1.
FIG. 4 is a top, cross-sectional view of an appliance that includes a protruded handle according to an embodiment.
FIG. 5 is a top, cross-sectional view of an appliance with a protruded handle according to another embodiment.

### DETAILED DESCRIPTION

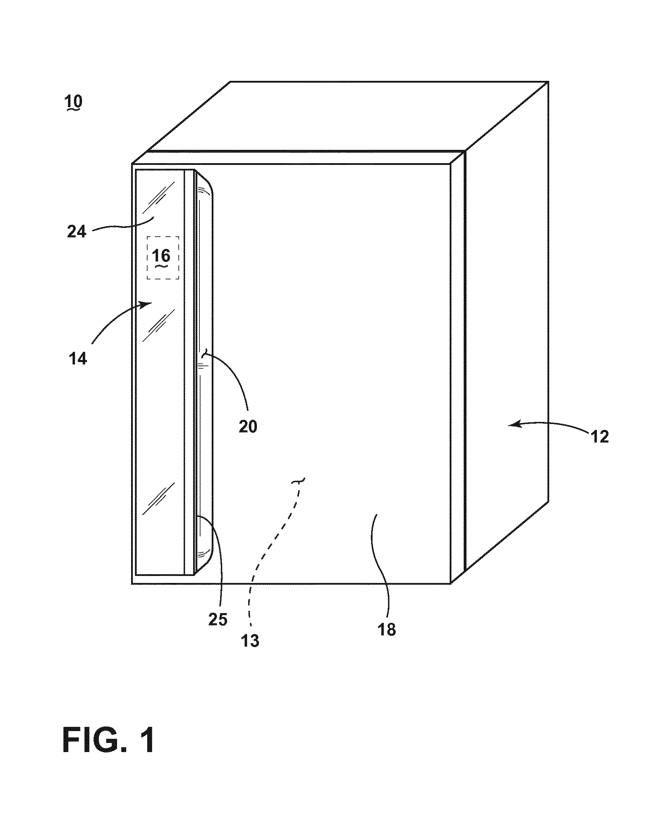

In FIG. 1, a household appliance 10 is illustrated having an appliance housing 12, an HMI 14, and an associated controller 16 (shown schematically in phantom). The appliance housing 12 may define an interior and may be a frame or chassis with or without panels mounted to the frame. Depending on the appliance, the housing 12 may be a cabinet structure. To access the interior, the appliance housing 12 may include an access opening 13. At least one closure element 18 is provided to selectively cover the access opening 13. The closure element 18 may move between a closed position, wherein the closure element 18 covers the access opening 13 and an opened position, wherein the user may access the access opening 13. The closure element 18 may be any hinged, sliding or revolving barrier that provides selective access to the interior of the appliance housing 12. Non-limiting examples include a door, a drawer, a lid, an access panel, etc.

The HMI 14 may be mounted on the closure element 18 in an HMI housing 24 and may include, but is not limited to a digital display, speakers, a keypad, switches, lights, knobs, capacitive touch-sensing technology or capacitive touch switches for receiving input from a user, and a PCB to which the interface electronics are mounted upon and interconnected. The HMI housing 24 may be a structural housing to protect and provide mechanical support for the interface electronics and the PCB or may be a cavity within the HMI 14 that provides space to allow the electronics and PCB to mechanically fit inside the closure element 18. The controller 16 may be operably coupled with elements of the HMI 14 such that it may receive user-selected inputs and communicate information to the user through the HMI 14. In this manner, the HMI 14 may be used to select or modify a cycle of operation or to set one or more operating parameters of a physical operation to be performed on a domestic article according to the user's preferences and the controller 16 may be operably coupled to various components of the appliance 10 to implement a cycle of operation or physical operation to be performed on a domestic article.

It should be appreciated that the embodiments described herein apply to any household appliance that includes an HMI and a closure element including appliances that provide heating, cooling, cleaning, drying, refreshing, compressing, cooking and dispensing. It is contemplated that the household appliance 10 may be any suitable household appliance, non-limiting examples of which include a horizontal or vertical axis washing machine; a horizontal or vertical axis automatic dryer; a combination washing machine and dryer; a tumbling or stationary refreshing/revitalizing machine; an extractor; a non-aqueous washing apparatus; a revitalizing machine, a range, an oven, a microwave oven, a refrigerator, a clothes freshener, a garage locker, a blender, a dishwasher and the like.

Formed in the closure element 18, a handle recess 20 is a void set back from the external surface of the closure element 18. The handle recess 20 assists a user in opening and closing the closure element 18 by permitting access to a handle. As shown in FIG. 1, the handle recess 20 provides a user access to a space behind the HMI 14. In this way, the HMI housing 24 includes an edge 25 that overlies the handle recess 20 and forms a portion of the handle such that a user may grip the overlying edge 25 of the HMI housing 24 to pull the closure element 18 open.

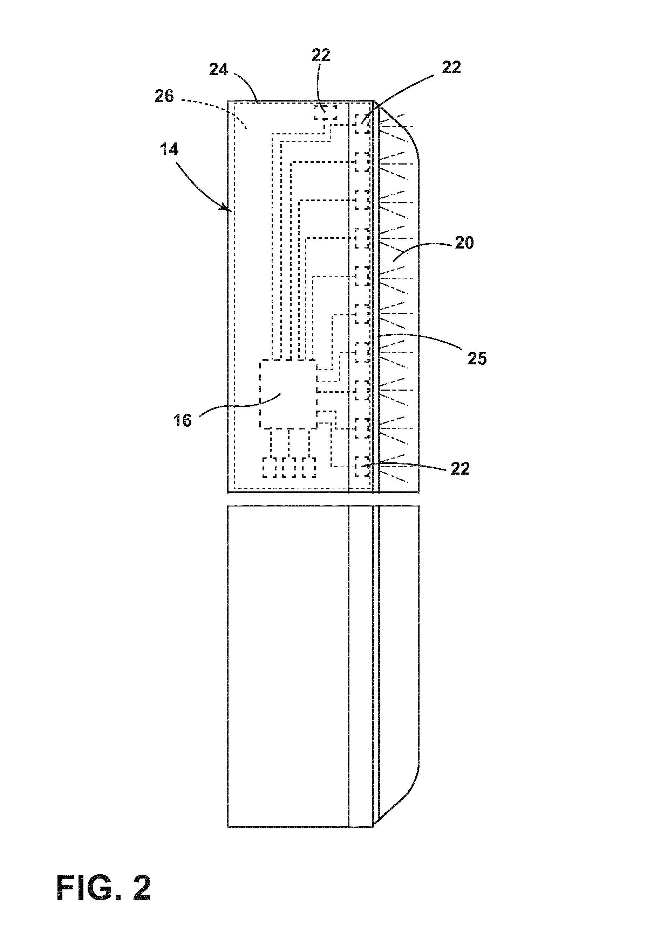

In FIG. 2, an enlarged portion of the appliance 10 of FIG. 1 is illustrated showing the HMI 14 and handle recess 20. The HMI 14 includes one or more light sources 22 located within the HMI housing 24. The light sources 22 are configured to provide light into the handle recess 20. At least some of the light sources 22 may be mounted along the edge 25 overlying the handle recess 20. The light sources 22 may be light-emitting diodes (LEDs) or alternative light emitting devices.

Each light source 22 may be of a single color or multiple colors. For a single color, a single color LED is contemplated. For a multi-color light source, a multiple color LED, like a dual-color or tri-color LED is contemplated. The LEDs may be side fire, top fire or reverse fire LEDs depending upon the implementation. Each light source 22 may be operably coupled to the controller 16 via a conductive trace on the PCB 26. The controller 16 may control the mixing of light from each light source 22 to generate custom colors.

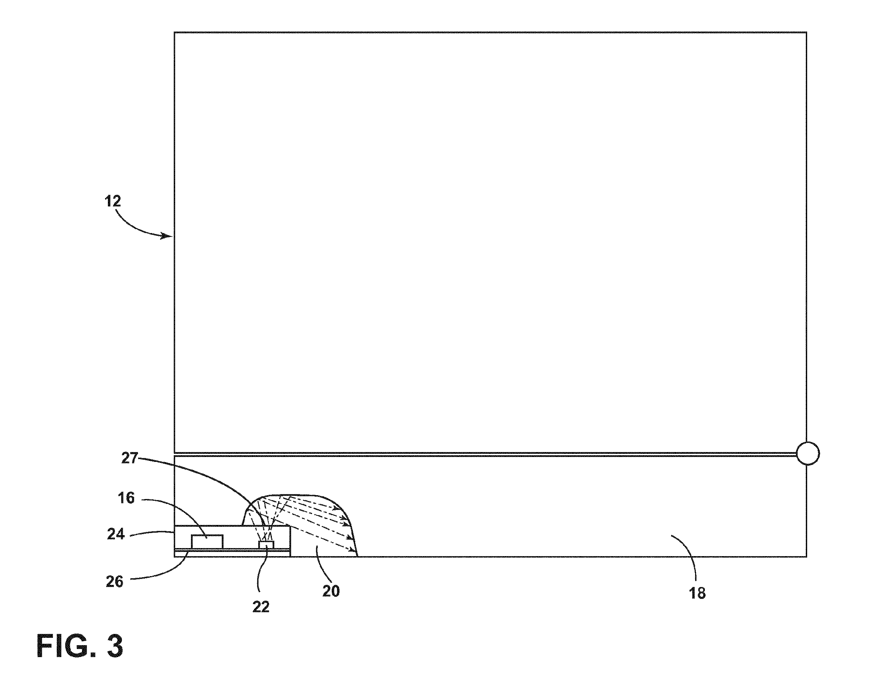

To further illustrate how the light sources 22 are configured to provide light into the handle recess 20, FIG. 3 shows a top, cross-sectional view of the appliance of FIG. 1. The HMI 14 includes a PCB 26 housed within the HMI housing 24. Mounted to the PCB 26, one or more light sources 22 are positioned to transmit light through the HMI housing 24 into the handle recess 20. As shown, the LEDs are top fire LEDs so they transmit light away from the surface of the PCB 26 on which they are mounted. The light sources 22 are contemplated to be out of sight to the user, such that the user only sees the emitted light in the handle recess 20 or decorative trim at or around the handle recess 20.

The structural framework of the HMI housing 24 may include one or more light-transmissive portions 27 of transparent or semi-transparent material to allow light to pass through to the handle recess 20. That is, the HMI housing 24 may be formed principally of opaque material and include transparent or semi-transparent light transmissive portions 27 located on the HMI 14 between one or more light sources 22 and the handle recess 20. The light transmissive portions 27 may be provided along an edge or a rear side of the HMI 14. The transparent or semi-transparent light transmissive portions 27 may be shaped to focus, spread out or scatter the light emitted from the light sources 22 and transmitted into the handle recess 20 or onto proximate trim. For example, the transparent or semi-transparent light transmissive portions 27 may be formed as a lens, a diffuser or flat plate. The transparent or semi-transparent portions 27 may be clear or tinted. The transparent or semi-transparent portions 27 may also include optical interferences to project patterns of lighting into the surface of the handle recess 20. Alternatively, the one or more portions 27 may be formed as holes or an opening in the HMI housing 24. Likewise the surface of the handle recess 20 may be glossy or dull, smooth, mottled, dappled, etc. or combinations thereof such that the light transmitted from the light sources 22 reflects off of the surface of the handle recess 20 according to a desired aesthetic appearance. In this way, the HMI 14 provides accent lighting in the handle recess 20.

The accent lighting may include a predetermined backlighting that may be applied to the handle recess 20. The controller 16 determines the intensity and/or color of each of the light sources 22 to generate the predetermined backlighting, which is accomplished by an algorithm being implemented as a computer program being executed by the controller 16, with the algorithm using one or more external states or sensed conditions as input. The controller 16 may execute a suitable program that is configured to select the color and the intensity of the light based on conditions relating to, sensed proximity of a user, time of day, appliance diagnostics, etc. By predetermined backlighting, it is meant that at least the intensity of the light, and optionally the color, of the light sources is controlled so that a predetermined backlight pattern is applied to the handle recess 20. The intensity of each light source 22 may be individually controlled to obtain the desired backlighting. In some cases, it may be desired to increase the intensity of one or more of the light sources 22 while decreasing the intensity of the other light sources. One such predetermined backlighting is one that provides the handle recess 20 with a substantially even backlighting when viewed from the outer surface of the appliance housing 12 or closure element 18.

Another example of backlighting is one that increases in intensity as a user approaches the appliance. Another example of backlighting is one where the intensity is a function of ambient light levels. Other predetermined backlighting scenarios are contemplated.

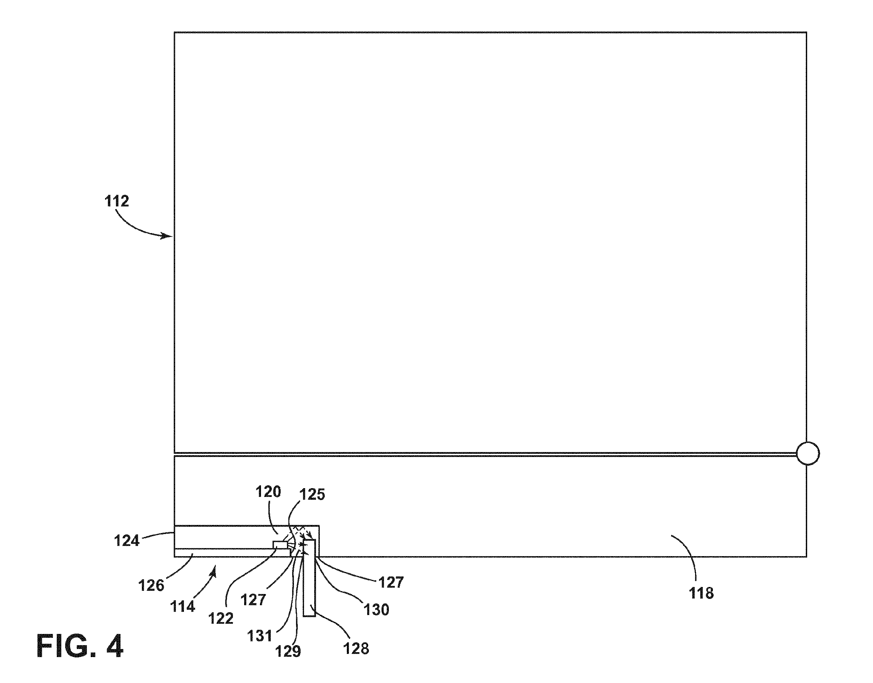

FIG. 4 is a top, cross-sectional view of an appliance that includes a protruded handle according to an embodiment. The embodiment is similar to the embodiment presented above; therefore, like parts will be identified with like numerals increased by 100, with it being understood that the description of the like parts of the previous embodiment applies to the current embodiment, unless otherwise noted.

One difference is that a protruded handle 128 is mounted in the handle recess 120. The protruded handle 128 may be one of any conventional protruded handle arrangements for appliances. For example, the protruded handle 128 may be formed from multiple pieces, including a handle frame and a handle piece having a gripping portion. Such a handle is typically mounted to an element of the closure element 118 such as by utilizing screws which extend through the handle piece and frame, clamping the overall handle to a panel of the closure element 118.

Another difference is that the handle recess 120 is formed in the HMI housing 124. As in the previous embodiment, an edge 125 of the HMI housing 124 overlies the handle recess 120. Light transmitted from the light source 122 illuminates the handle recess 120 and may reflect off of the inside surface of the HMI housing 124 where it may be incident on portions of the protruded handle 128 or the overlying edge 125 of the HMI housing 124. The edge 125 of the HMI housing 124 may include one or more transparent or semi-transparent light transmissive portions 127 such that accent lighting is provided through the handle recess 120 and onto the external surface of the HMI housing 124 at the location of the protruded handle 128.

To further provide accent lighting of the handle, the protruded handle 128 may include two side portions 129 and 130 whose surfaces are illuminated by light provided from the light sources 122 and transmitted through the handle recess 120. The illuminated side portions 129 and 130 may include portions both inside and outside of the handle recess 120 such that at least a portion of the handle extends into the handle recess 120 and a portion extends beyond the closure element 118. The side portions 129 and 130 may include at least one edge of the handle that faces a user. It is contemplated that portions of the handle 128 that extend beyond the closure element 118 may be generally orthogonal to the orientation of the PCB 126. Light emitted from the light source 122 may illuminate a base portion 131 of the handle 128, that is, the portion of the handle located laterally from the light source 122.

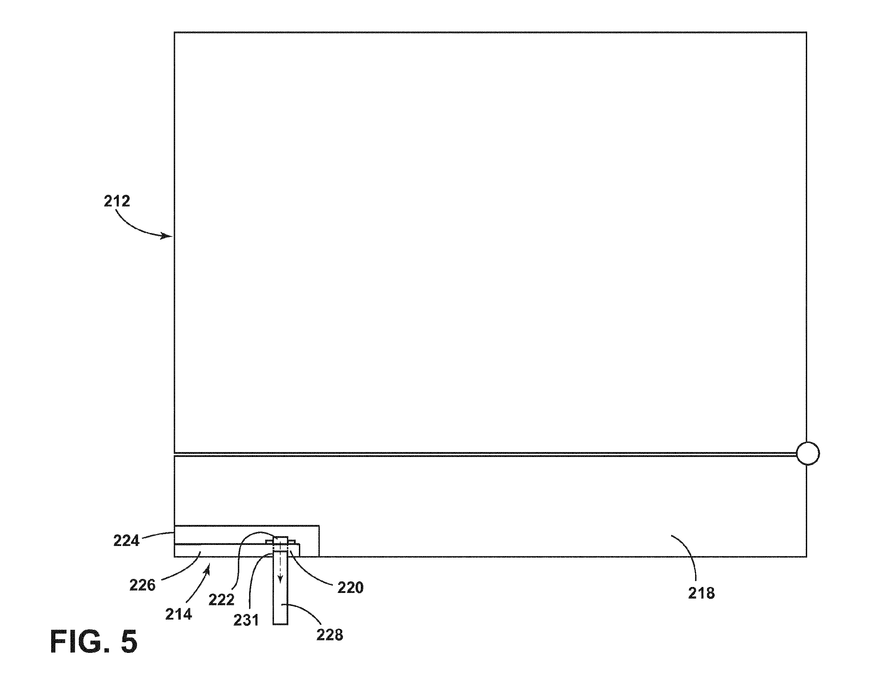

FIG. 5 is a top, cross-sectional view of an appliance with a protruded handle according to another embodiment. One difference from the previous embodiment is that the handle recess 220 is formed in the PCB 226 in the HMI housing 224. Another difference is that the light source 222 is located beneath the base portion 231 of the handle 228 and transmits light through the PCB 226 such as may be provided by a reverse mount LED. The protruded handle 228 may include a light guide to transmit light from the handle recess 220 to any portion of the protruded handle 228. For example, the protruded handle 228 may include a light-transmissive guide to transfer light to a viewable outer surface and may comprise an insert provided in the protruded handle 228. The light transmissive guide may be of different color, material, and/or transmittance than the rest of the protruded handle 228.

All technical features of all embodiments described above can be combined in all possible combinations, unless expressly stated otherwise. Also, all claims can be combined in all possible combinations, even if not so expressly claimed. In addition to the concepts covered by the below claims, the following concepts can also provide the bases for claims in any possible combinations:
An appliance wherein the HMI comprises a printed circuit board (PCB) and the at least one light source is carried by the PCB.
An appliance wherein the appliance is one of a refrigerator, an oven, a range, a dishwasher, a washing machine, a dryer, a clothes freshener, a garage locker, a blender, a mixer, or a microwave.
An appliance comprising: an appliance housing having an access opening; a closure element that selectively covers access opening; a human-machine interface (HMI) having an HMI housing; a handle recess formed in the closure element; a protruding handle wherein at least a portion of the handle extends into the handle recess and a portion extends beyond the closure element; and at least one light source provided within the HMI housing and configured to provide light into the handle recess and onto at least one portion of the protruded handle.

While various embodiments of the application have been described, it will be apparent to those of ordinary skill in the art that many more embodiments and implementations are possible that are within the scope of this invention. Accordingly, the invention is not to be restricted except in light of the attached claims and their equivalents.

## Claims

1. An appliance (10) comprising:
an appliance housing (12) having an access opening (13);
a closure element (18) that selectively covers the access opening;
a handle recess (20) formed in the closure element;
a human-machine interface (HMI) (14, 114, 214) having an HMI housing (24, 124, 224) with an edge (25) overlying the handle recess and forming at least a portion of a handle (128, 228); and
at least one light source (22, 122, 222) provided within the HMI housing and configured to provide light into the handle recess.

2. The appliance of claim 1 wherein the at least one light source (22, 122, 222) comprises a multi-color light source.

3. The appliance of claims 1-2 wherein the HMI (14, 114, 224) further comprises a printed circuit board (PCB) (26, 126, 226) to which the at least one light source is mounted.

4. The appliance of claim 3 wherein the HMI (14, 114, 224) further comprises a controller (16, 116, 216) mounted to the PCB (26, 126, 226) and operably coupled to the at least one light source (22, 122, 222).

5. The appliance of claims 3-4 wherein the PCB (26, 126, 226) is oriented generally orthogonal to the handle.

6. The appliance of claims 3-5 wherein the at least one light source (22, 122, 222) is located on the PCB (26, 126, 226) to emit light onto a base portion of the handle.

7. The appliance of claims 1-6 wherein the HMI housing (24, 124) further comprises one or more light transmissive portions through which the light from the at least one light source is emitted.

8. The appliance of claim 7 wherein the light transmissive portion is at least one of: provided along one of the edge or a rear side of the HMI (14, 114), overlies a portion of the handle recess (20, 120), or an opening in the housing of the HMI (14, 114).

9. The appliance of claim 8 wherein the opening overlies the housing of the HMI.

10. The appliance of claims 1-9 wherein the light source is located at least one of:
relative to the handle to emit light on a base portion of the handle, beneath the base portion of the handle, or laterally of the base portion.
